# EUROPEAN PATENT APPLICATION

(11) **EP 1 944 594 A2**
(43) Date of publication of application: **16.07.2008**
(21) Application number: 08150054.8
(22) Date of filing: 04.01.2008
(51) Int. Cl.: G01K 17/10, G01N 25/20

(54) **Method and apparatus for measuring the effective heat transfer in a system having a fluid circuit**

(30) Priority: 15.01.2007 NL 1033227
(71) Applicant: Groenholland B.V., 1059 CD Amsterdam (NL)
(72) Inventor: Witte, Hendrik J.L., 1067 WL, Amsterdam (NL); van Gelder, August J., 2101 BA, Heemstede (NL)
(74) Representative: Klavers, Cornelis

(57) **Abstract**

What is disclosed is a method wherein thermal parameters of a heat exchanger incorporated in a fluid circuit are determined by supplying a (possibly pulsating) energy pulse of a known magnitude, which is constant at least for a certain period of time, to the heat exchanger. The system parameters are determined from the temperature response to the energy pulse, which energy pulse comprises heat or cold delivered by a reversible heat pump or a cooling machine. The device for carrying out the method may comprise a buffer vessel, a frequency-controlled pump and a three-way valve, by means of which the control in question stabilises the energy pulse so as to obtain more accurate results.

## Description

The present invention relates to a method wherein thermal parameters of a heat exchanger incorporated in a fluid circuit and of the medium surrounding the heat exchanger are determined.

The invention furthermore relates to a device for carrying out the method and to a control circuit suitable for carrying out the method by means of the device.

Heat exchangers are used inter alia in climate control systems, such as air conditioning systems, underfloor heating systems, or industrially in air or water treatment units, radiators, convectors, roadway heating systems and the like. Heat exchangers are also used as ground heat exchangers, in which case they are installed in the ground at a depth varying between 1 m and 400 m after a borehole has been drilled at the location in question. In the summer, for example, hot water, also called the primary medium hereinafter, is pumped via pipes to the one or more ground heat exchangers, where the water gives off heat to the underground element, the secondary medium, and returns in cooled condition via return lines to be subsequently used for cooling a building. In a reverse process, the building can be heated in the winter. Said cooling or heating of the building can be realised both directly and mechanically by means of a heat pump.

Irrespective of the specific use of the heat exchanger, it is important in practice to have information regarding the specific heat transfer between the primary and the secondary medium, because this is one of the most important parameters for the correct design of a (ground) heat exchanger system. When a heat exchanger incorporated in a fluid circuit is used, the aforesaid thermal parameters, in particular the temperature distribution, the heat conduction coefficient, the heat capacity of the secondary medium and the thermal resistance between the heat exchanger and the secondary medium are not known.

Said thermal parameters largely determine the capacity, the efficiency, the energy transfer rate, the construction and, for example, the shape of the heat exchangers. For ground heat exchangers, the rate at which heat is exchanged between the fluid and the ground is related to the ground heat conduction coefficient, which is difficult to estimate accurately, and the borehole resistance. For such a heat exchanger this means that in particular the length of the heat exchangers, the spacing therebetween and the number of heat exchangers are usually selected with a certain safety margin, which makes the heat exchanger unnecessarily costly, without this leading to an increased efficiency of the thus overdimensioned system. If an under-dimensioned heat exchanger is devised, however, or the heat exchangers are spaced too close together, the system will be unable to realise the intended degree of efficiency or even to deliver the required power.

The object of the present invention is to provide a method, a device and a control system by means of which the relevant thermal parameters can be accurately determined, so that the local energy requirement can be met, using an optimally geared system which can operate at lower cost with a given efficiency.

In order to accomplish that object, the method according to the invention is characterised by the features defined in claim 1.
Similarly, the device and the control circuit according to the invention are characterised by the features defined in claims 10 and 12, respectively.

Advantages of the method, the device and the control circuit according to the invention include the fact that they make it possible to inject heat (energy) into the environment but also to withdraw heat (energy) therefrom - the ground in the case of ground heat exchangers. As a result, it is possible to determine the thermal parameters under different, even opposite conditions, which parameters may also be different under certain circumstances, so that the system as a whole and the heat exchangers in particular can be optimally geared thereto, so as to operate the system with the highest possible efficiency in a manner that is advantageous as regards cost price.
By injecting heat, underground convection can be induced in the case of ground heat exchangers, which leads to overestimated thermal conduction values. Said overestimation can be corrected by using heat extraction, in which process convection does not play an important role, so that the level of accuracy of the determination of the thermal conduction increases.

Advantageously, heat injection or extraction can be selected on the basis of, for example, the outside temperature. Any differences between the outside temperature and the temperature of the circulating fluid can thus be minimised, resulting in smaller measuring errors and an increased reliability of the measuring results and the thermal parameters.

A preferred embodiment of the method according to the invention is characterised in that the energy pulse is thermally buffered before being supplied to the heat exchanger.
The advantage of this is that said buffering makes it possible to maintain a very time-constant energy pulse, which furthermore enhances the stability of the method and the reliability of the results.

Other advantageous embodiments of the method, the device and the control circuit according to the present invention are defined in the remaining claims.

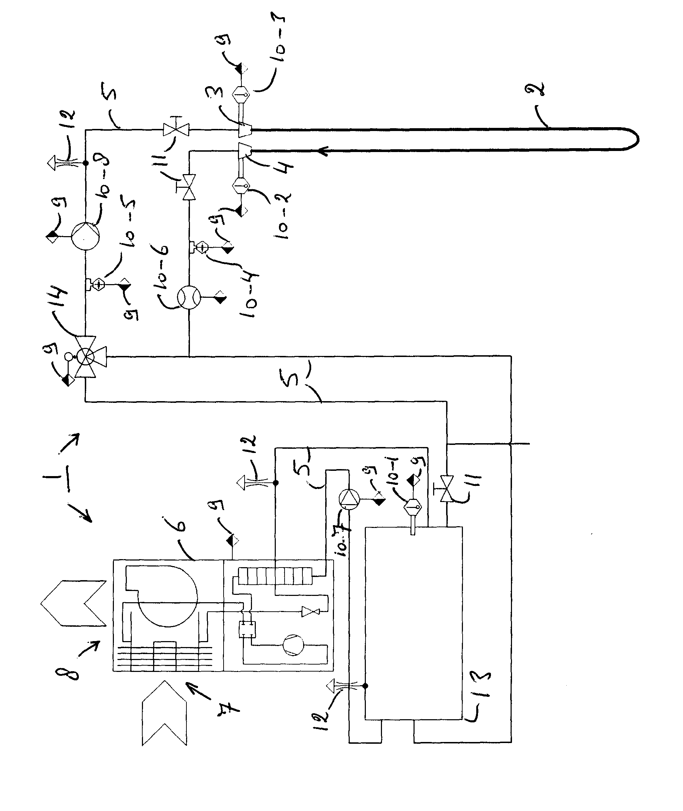

The method, the device and the control circuit according to the present invention will now be explained in more detail with reference to the figure below, which shows a survey of possible, currently preferred embodiments of the device according to the invention.
The figure shows a device 1 for determining quantities to be measured, on the basis of which thermal parameters for a heat exchanger can be determined means of a standard analysis protocol, the so-called line source method.

In this case the heat exchanger is configured as one or more heat exchangers 2 installed in the ground, which are schematically indicated as a U-shaped conduit. Examples of other possible shapes are a single or a multiple U-shape, a concentric shape and the like. A fluid, water in this case, flows through the heat exchanger 2 from an inlet 3, via the heat exchanger 2, to the outlet 4. An energy pulse in the form of a heat pulse or a cold pulse delivered to water, which originates form a reversible heat pump 6, is supplied to said at least one heat exchanger 2 via a pipe system 5 connected to said inlet 3 and said outlet 4. In the case of a cold pulse, the heat pump 6 functions as a cooling unit. The heat exchanger 2, which may be fitted with a (preferably electric) resistance heating element, if desired, is incorporated in a fluid circuit, which is represented as a closed fluid circuit, and may be directly connected to the heat pump 6. The heat pump 6 is in this case configured as a reversible water to air heat pump 6 comprising an air inlet 7 and an air outlet 8 and associated air displacement means and means that exchange energy with the air. The heat pump 6 supplies a time-constant energy pulse of a known magnitude to the heat exchanger 2 via the circulating water in a manner yet to be explained hereinafter, which heat exchanger exchanges the heat or cold contained therein with its environment. The device 1 comprises a processor-controlled control circuit 9, which is schematically indicated in the figure as a half-closed/half-open square that stands on its corner. All parts yet to be explained that are indicated by such a square communicate, whether wirelessly or by wire, with the control circuit 9 and deliver and/or receive their control commands thereto/therefrom. Said communicating parts also include means 10 for determining the temperature response to the energy pulse. Said response means 10 include at least temperature sensors 10-1, 10-2 and 10-3, analogue or digital pressure gauges 10-4 and 10-5, and a mass or volume flow meter 10-6. Said response means 10 provide the control circuit 9 with the information that is needed for maintaining the positive or negative energy pulse, or part of a modulating energy pulse, which is constant at least for some time, at a desired value by using a suitable control strategy. Appropriate PID actions are used, if necessary, for such stabilisation control means, which are known per se, which control means, operating as power control means, control a desired power with a fixed delivery setting, or as delivery control means to maintain a variable delivery yet to be explained hereinafter, or as a combination of both. Using such delivery control, the delivery as set can be monitored and be controlled independently.

Other ones of the aforesaid parts, such as circulation pumps 10-7 and 10-8 which are frequency-controlled or configured with a controllable throttle valve, as well as the controlled heat pump 6, take action at the command of the control circuit 9 to keep the energy pulse constant for a certain period of time by influencing the flow rate and/or the mass flow of the fluid. The device 1 further comprises shut-off valves 11 and de-aerators 12.

In the illustrated embodiment of the device 1, a buffer vessel 13 to be positioned horizontally or vertically is incorporated in the circulation circuit so as to help obtain a stable operation and even more accurate results, which buffer vessel is in turn incorporated in a fluid circuit to the heat pump 6. In practice the aforesaid position appears to partially determine the exact location where, depending on the energy pulse, the various pipes 5 are preferably installed. In order to further reduce the occurrence of temperature fluctuations in the buffer vessel 3, a diffuser may be installed in the buffer vessel 13 at the outlet side to the heat pump 2.
The operation and the control of the device 1 for carrying out the method so as to obtain reliable thermal parameters for the heat exchanger 2 are as follows. By applying a fixed thermal power of a predetermined magnitude to the heat exchanger 2, at least for some time, which heat exchanger is in this case disposed in the ground, the resulting temperature in time is determined on the basis of the above-indicated sensor-detection and measuring results. The temperature change is graphically plotted against the natural logarithm of time and evaluated by means of the line source method. From the obtained angle of inclination and the power, which is kept constant within a very small bandwidth by the power control means, the heat conduction coefficient is obtained, which determines inter alia the design length of the heat exchanger 2. Other thermal parameters, viz. more system-related parameters, which can be evaluated with this method are, for example, the number of ground heat exchangers, the depth, the shape, for example a single or multiple U-shape or a concentric shape, the way they are arranged, the construction of the borehole and the spacing between heat exchangers. Using the formula that is known from the line source method, the borehole resistance can be graphically determined. The borehole resistance is representative of losses in the heat exchanger 2 that result from the construction and shape thereof. The method provides reliable data about this as well, because the reliability thereof is not affected by the possibly insufficient constancy of the energy pulse.
The method as provided can furthermore be used both with heat injection (positive energy pulse) and with heat extraction (negative energy pulse), but also with alternating pulses, possibly of varying magnitude. The result is that thus data become available about differences in the design of the heat exchanger 2 and the associated system control means in the case of heat injection in the summer and heat extraction in the winter, for example. Furthermore it is possible to combine the present method with methods that employ other analytical or numerical models, for example for quantitatively determining the thermal effects of ground water flow through lateral ground water transport resulting from a pressure gradient, or temperature-induced convection of ground water.

The illustrated embodiment of the device 1 further comprises a three-way control valve 14, which is connected in the pipe 5 to the inlet 3 of the heat exchanger 2 in this case and which is also connected to the control circuit 9. The three-way control valve 14 helps maintain the aforesaid desired temperature difference by controlling the amount of fluid that returns from the heat exchanger 2 via the outlet 4, which is added to the fluid flow to the inlet 3 by the valve 14. In principle it is also possible to mount the three-way valve 14 in the return line from the outlet 4; fluid flowing to the inlet 3 is in that case mixed with fluid from the outlet 4. The aforesaid delivery control means, which controls on a variable delivery, can do so with a fixed mixing ratio between the fluid from the heat exchanger 2 and the fluid from the buffer vessel 13.
Insofar as the introduction of the three-way valve 14 slows down the system, said control means can be adapted thereto by gearing the control to the product of the aforesaid delivery and the desired temperature difference.

## Claims

1. A method wherein thermal parameters of a heat exchanger incorporated in a fluid circuit are determined, wherein a possibly pulsating energy pulse of a known magnitude, which is constant at least for a certain period of time, is supplied to the heat exchanger, and wherein thermal parameters relating to the heat transfer are determined from the temperature response to the energy pulse, wherein the energy pulse comprises heat or cold delivered by a reversible heat pump or a cooling machine.

2. A method according to claim 1, **characterised in that** the energy pulse is thermally buffered before being supplied to the heat exchanger.

3. A method according to claim 1 or 2, **characterised in that** a control means maintains a desired temperature difference between fluid that flows to the heat exchanger and fluid that returns therefrom.

4. A method according to claim 3, **characterised in that** said control means is an active control means (that operates according to the PID principle or other control principle), which may or may not be combined with delivery control and/or power control means.

5. A method according to either one of the claims 3 or 4, **characterised in that** the aforesaid desired temperature difference is partially maintained by controlling that amount of fluid returning from the heat exchanger which is added to the fluid flow to the heat exchanger.

6. A method according to claim 5, **characterised in that** the aforesaid control process is carried out by means of a three-way control valve.

7. A method according to any one of the claims 1-6, **characterised in that** heat and cold pulses are alternately supplied to the heat exchanger, possibly in different power steps.

8. A method according to any one of the claims 1-7, **characterised in that** the thermal parameters for a ground heat exchanger are system-related parameters, such as the number of heat exchangers, their distance apart, the manner of arrangement, the depth, the borehole construction and the type of heat exchanger.

9. A method according to any one of the claims 1-8, **characterised in that** the reversible heat pump is a reversible water to air heat pump.

10. A device for carrying out the method according to any one of the claims 1-9, wherein the device comprises: a heat exchanger incorporated in a fluid circuit; a heat pump for supplying a possibly modulating energy pulse of a known magnitude, which is constant at least for a certain period of time, to the heat exchanger; and means for determining the temperature response to the energy pulse, **characterised in that** the heat pump is a reversible heat pump, which is configured to generate an energy pulse which contains heat or cold.

11. A device according to claim 10, **characterised in that** the device comprises a three-way control valve, which is switched between an inlet and an outlet of the heat exchanger.

12. A device according to claim 10 or 11, **characterised in that** the device comprises a (preferably electric) heating element, which is coupled to the heat pump.

13. A control circuit suitable for controlling the device according to any one of the claims 10-12 for using the method according to any one of the claims 1-9 therein, by means of which a heat or cold-containing energy pulse delivered by a reversible water pump is kept constant, at least for a certain period of time.

14. A heat pump designed on the basis of thermal parameters obtained by using the method according to any one of the claims 1-9.
